(19) Europäisches Patentamt
European Patent Office
Office européen des brevets

(11) Publication number: 0 321 293 A2

# (12) EUROPEAN PATENT APPLICATION

(21) Application number: 88311965.3

(22) Date of filing: 16.12.88

(51) Int. Cl.[4]: C 08 L 67/02
//(C08L67/02,23:16)

(30) Priority: 18.12.87 US 134937

(43) Date of publication of application: 21.06.89 Bulletin 89/25

(84) Designated Contracting States: BE CH DE ES FR GB IT LI NL SE

(71) Applicant: EXXON CHEMICAL PATENTS INC.
200 Park Avenue
Florham Park New Jersey 07932 (US)

(72) Inventor: Kaufman, Lawrence George
498 Auten Road 3D
Somerville New Jersey 08876 (US)

Siano, Donald Bruce
624 Clark Street
Westfield New Jersey 07090 (US)

Datta, Sudhin
30 Briarwood Drive
Matawan New Jersey 07747 (US)

(74) Representative: Dew, Melvyn John et al
Exxon Chemical Limited Exxon Chemical Technology Centre P.O. Box 1
Abingdon Oxfordshire, OX13 6BB (GB)

## (54) Improved polybutylene terephthalate moulding composition.

(57) Polybutylene terephthalate molding compositions modified by the addition of elastomeric ethylene-propylene copolymers containing small amounts of norbornyl carboxylate, amine, alkyl amine, aryl amine or hydroxyl groups, exhibit superior impact strength, especially at low temperatures.

EP 0 321 293 A2

**Description**

## IMPROVED POLYBUTENE TEREPHTHALATE MOULDING COMPOSITION

The use of high molecular weight thermoplastic linear polyesters of alkylene glycols with terephthalic acid for the production of molded articles has increased in recent years. One of the more desirable thermoplastic polyesters is polybutylene terephthalate (PBT) which exhibits a desirable overall balance of most mechanical properties such as tensile strength, flexural modulus and the like. The polybutylene terephthalate has the characteristic of undergoing a very rapid crystallization from the melt and products molded with this resin possess a high degree of surface hardness, abrasion resistance and gloss, and a low degree of surface friction.

Unfortunately, the notched Izod impact strength of polybutylene terephthalate is rather low. This results in preventing the use of this desirable plastic in some applications where higher impact strengths are required. In an effort to overcome this deficiency, numerous materials have been blended with polybutylene terephthalate. For example:

U.S. Patent 4,172,859 teaches toughened thermoplastic compositions of various materials including polyester resins of poly (1,4-butylene) terephthalate admixed with about 1-40 wt. % of at least one random copolymer and sheared so as to disperse the random copolymers in the resin in a particle size of 0.01 to 3.0 microns. The random copolymer is said to be comprised of one or more monomers taken from eight classes of monomers, included within which are ethylene, propylene and non-conjugated dienes, specific examples being ethylene/propylene/1,4-hexadiene-g-maleic anhydride, ethylene/propylene/5-propenyl-2-norbornene-g-maleic anhydride ethylene/propylene/1,4-hexadiene/norbornadiene-g-fumaric acid, ethylene/propylene/5-ethylidine-2-norbornene-g-fumaric acid (sic), and ethylene/propylene/1,4-hexadiene/5-ethylidiene-2-norbornene-g-fumaric acid (sic). Improved notched Izod values as reportedly tested in accordance with ASTM-256-56 are taught and the improvement is said generally to be proportional to adherent sites in the polymeric component, the melt viscosity and molecular weight distribution.

U.S. Patent 4,251,644 teaches the formation of blends of EPM and EPDM polymers with polyamides (nylon) or dacron-type polyesters to provide improved physical and mechanical properties such as improved impact strength, tensile strength, toughness, flexure and the like. The EPM and EPDM are modified to incorporate highly polar groups such as amine groups, amide groups, thio groups, ether groups, ester groups and the like by including an additional monomer in the polymerization reaction mixture used to form the modifier. A variety of unsaturated monomers containing polar groups such as dialkylaminoalkyl (meth) acrylates, (meth) acrylamides, N-vinyl caprolactams and their thio analogs, and the like can be used.

Lee et al., "Polyester Polyblends (I) Poly(butylene terephthalate) and Poly(ethylene-copropylene) Rubber", J. Chinese Institute of Chem. Eng., 1982, 13, pp. 59-68, describe the modification of polybutylene terephthalate with ethylene-propylene rubber either by bulk suspension polymerization or mechanical blending in an extruder. Improved impact strengths were realized.

European Patent Publication No. 107,303 describes high impact strength blends of polybutylene terephthalate, polycarbonate resin and a graft copolymer of EPDM type rubber, although ethylene-propylene rubber can also be used, grafted with at least one polar monomer such as an alkenoic nitrile, ester, amide or acid, or a vinyl aromatic monomer. The EPDM is preferably an ethylene-propylene-ethylidene norbornene terpolymer.

Japanese Application 176982 teaches compositions stated to have improved mechanical properties including impact resistance and heat resistance which are a combination of a thermoplastic polyester such as polybutylene terephthalate, an ethylene/C3-6 alpha-olefin copolymer graft polymerized with 0.1-10 weight percent of an unsaturated carboxylic acid or anhydride, an amide group containing resin and a polyepoxide compound.

Japanese Application 228823 teaches a composition said to have improved impact resistance which combines a thermoplastic polyester such as polybutylene terephthalate with a polyolefin such as ethylene-propylene copolymer modified by adding a small amount of an alicyclic carboxylic acid containing cis type double bonds in rings or their functional derivatives, and an olefin-glycidyl methacrylate polymer.

Japanese Application 115121 teaches a polyester resin composition containing polybutylene terephthalate, a glycidyl group containing copolymer and an ethylene/propylene/non-conjugated diene copolymer. The non-conjugated diene is preferably 5-methylidene-2-norbornene.

Japanese Application 163779 teaches a polyester composition comprising an aromatic polyester, a modified ethylenic copolymer obtained by graft reacting an unmodified ethylene series copolymer such as ethylene-propylene copolymer with an unsaturated carboxylic acid or derivative such as glycidyl methacrylate, maleic anhydride or maleic acid amide, and an epoxy, isocyanate or carboxylic anhydride polyfunctional compound.

Polybutylene terephthalate as an engineering plastic has excellent surface hardness, good dimensional stability, high heat distortion temperature, good oil resistance and good processability but, because it is a semicrystalline material, it has poor impact resistance, especially at low temperatures. The previous attempts to modify polybutylene terephthalate by the addition of various rubbers have resulted in improved impact at room temperature. However, the above-cited prior art does not teach means for improving the low temperature impact resistance, that is, means of lowering the ductile-brittle transition temperature.

Accordingly, it is the object of this invention to provide an improved polybutylene terephthalate molding composition and more particularly, a polybutylene terephthalate molding composition which exhibits increased impact resistance, especially at low temperatures. This and other objects of the invention will become apparent to those of ordinary skill in this art from the following detailed description.

This invention relates to improved polybutylene terephthalate molding compositions and their preparation and, more particularly, to the blending of polybutylene terephthalate with a modified ethylene-propylene elastomeric copolymer modified to contain a small amount of norbornyl carboxylate, amino, alkylamine or hydroxyalkyl groups, which exhibit superior impact strength at low temperatures.

In accordance with the present invention, an improved thermoplastic molding composition is provided and contains, in addition to the polybutylene terephthalate and conventional fillers and processing aids, a modified elastomeric copolymer of ethylene and propylene. The modified elastomeric copolymer is generally present in an amount of about 5 to 35% by weight and preferably about 20-30% by weight of polybutylene terephthalate.

"Elastomeric copolymer of ethylene and propylene" is meant herein to include generally both EPM and EPDM rubber polymers disclosed in the prior art. EPM rubber polymers are formed by interpolymerization of ethylene and one or more higher mono-olefins, particularly alpha-olefins, having from 3 to 25 carbon atoms, preferably propylene. The higher mono-olefins suitable for use may be branched or straight chain, cyclic and aromatic substituted or unsubstituted and are preferably alpha-olefins having from 3 to 16 carbon atoms. Illustrative non-limiting examples of preferred alpha-olefins are propylene, 1-butene, 1-pentene, 1-hexene, 1-octene and 1-dodecene. Mixed olefins can also be used (e.g., propylene and 1-butene, mixed butenes, etc.). The alpha-olefin is generally incorporated into the EPM rubber polymer in an amount of about 10 to about 90 wt. %, more preferably at about 15 to about 65 wt. % and even more preferably about 35 to about 60 wt. %.

The alpha-olefins, when substituted, should not be aromatic substituted on the 2-carbon position (e.g., moieties such as $CH_2=CH$-φ- should not be employed), since such an aromatic group interferes with the subsequent desired polymerization. Illustrative of such substituted alpha-olefins are compounds of the formula $H_2C=CH-C_nH_{2n}-X$ wherein n is an integer from 1 to 20 carbon atoms (preferably 1 to 10 carbon atoms), and X comprises aryl, alkylaryl or cycloalkyl. Exemplary of such X substituents are aryl of 6 to 10 carbon atoms (e.g., phenyl, naphthyl and the like), cycloalkyl of 3 to 12 carbon atoms (e.g., cyclopropyl, cyclobutyl, cyclohexyl, cyclooctyl, cyclodecyl, cyclododecyl and the like), alkaryl of 7 to 15 carbon atoms (e.g., tolyl, xylyl, ethylphenyl, diethylphenyl, ethylnaphthyl and the like). Also useful are alpha-olefins substituted by one or more such X substituents wherein the substituent(s) are attached to a non-terminal carbon atom, with the proviso that the carbon atom so substituted is not in the 1- or 2-carbon position in the olefin. Included are the alkyl-substituted bicyclic and bridged alpha-olefins, of which $C_1$-$C_9$ alkyl substituted norbornenes are preferred (e.g., 5-methyl-2-norbornene, 5-ethyl-2-norbornene, 5-(2′-ethylhexyl)-2-norbornene and the like).

EPDM rubber polymers are formed of ethylene and one or more higher mono-olefins as described above, plus one or more polymerizable non-conjugated dienes. Non-conjugated dienes suitable for purposes of the present invention can be straight chain, hydrocarbon di-olefins or cycloalkenyl-substituted alkenes, having about 6 to about 15 carbon atoms, for example:

A. straight chain acyclic dienes, such as 1,4-hexadiene and 1,6-octadiene;

B. branched chain acyclic dienes, such as 5-methyl-1,4-hexadiene; 3,7-dimethyl-1,6-octadiene; 3,7-dimethyl-1,7-octadiene; and the mixed isomers of dihydro-myricene and dihydro-ocinene;

C. single ring alicyclic dienes, such as 1,3-cyclopentadiene; 1,4-cyclohexadiene; 1,5-cyclo-octadiene and 1,5-cyclododecadiene;

D. multi-ring alicyclic fused and bridged ring dienes, such as tetrahydroindene; methyl-tetrahydroindene; dicyclopentadiene; bicyclo-(2.2.1.)-hepta-2,5-diene; alkenyl, alkylidene, cycloalkenyl and cycloalkylidene norbornenes, such as 5-methylene-2-norbornene (MNB), 5-propenyl-2-norbornene, 5-isopropylidene-2-norbornene, 5-(4-cyclo pentenyl)-2-norbornene, 5-cyclohexylidene-2-norbornene and 5-vinyl-2-norbornene;

E. cycloalkenyl-substituted alkenes, such as allyl cyclohexene, vinyl cyclooctene, allyl cyclodecene, vinyl cyclododecene.

Of the non-conjugated dienes typically used, the preferred dienes are dicyclopentadiene, 1,4-hexadiene, 5-methylene-2-norbornene and 5-ethylidene-2-norbornene. Particularly preferred diolefins are 5-ethylidene-2-norbornene (ENB) and 1,4-hexadiene. The non-conjugated diene is incorporated into the polymer in an amount of from about 0.5 to about 15 wt. %; more preferably, from about 1 to about 10 wt. %, e.g., 5 wt. %.

The elastomeric ethylene copolymer described above is modified so as to incorporate a small amount of about 0.1 to 5 weight percent, preferably about 0.25 to 2 weight percent of a 2-substituted-5-norbornene, based on the weight of the copolymer, therein. The substituent in the 2 position of the norbornene ring can be carboxyl, hydroxyalkyl, amino or N-aminoalkyl in which the alkyl group has one to four carbon atoms. Thus, the 2-substituted-5-norbornene can be of the formula

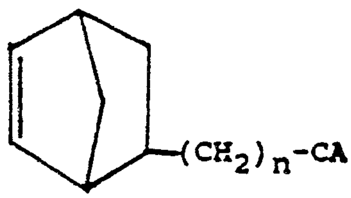

in which n is 0 to 3, A is -OOH, $-H_2OH$ or -NHR and in which R is H, an alkyl or an aryl of one to ten carbon atoms. A resin of the resulting modified elastomeric ethylene-propylene copolymer will generally have a Mooney viscosity of about 5 up to about 40 when measured at 127°C according to ASTM D-1246.

The modified ethylene-propylene elastomers of the present invention can be prepared by procedures known in the art. They can be prepared, for example, by the procedures set forth in U.S. Patents 3,884,888, 3,748,316, 3,796,687, 3,901,860 or 4,017,669. These patents teach the preparation of elastomeric ethylene random terpolymers and tetrapolymers from alpha-olefins non-conjugated dienes and unsaturated functional monomers by direct Ziegler-Natta polymerization of the monomers, usually in solvent, utilizing catalyst systems composed of trivalent, and higher, vanadium compounds, organoaluminum compounds and halogenated reactivator compounds. These polymerization reactions are run in the absence of moisture in an inert atmosphere and in a preferred temperature range of 0 to 65°C. Both continuous and batch reactions are taught.

The modified copolymers of ethylene and propylene of this invention can also be prepared by the process disclosed and taught in co-pending European patent application 88 305 222.7 claiming priority from US 059,711.

In accordance with the disclosure of this co-pending application ethylene, alpha-olefins, non-conjugated dienes and unsaturated functional monomers chemically "masked" by pre-reaction with certain non-halogenated organometallic compounds, can be copolymerized in a conventional Ziegler-Natta polymerization reaction utilizing, e.g., vanadium, zirconium or titanium catalysts with organoaluminum co-catalysts and conducted generally in solvent at temperatures ranging preferably from about 15-60°C. The modified copolymers of ethylene and propylene of this invention can then be produced by de-ashing the initially formed polymer by known methods utilizing various aqueous liquids, separating the resulting aqueous phase from polymer-rich solvent phase and separating the polymer from the polymer-rich solvent phase.

In the molding compositions prepared in accordance with the present invention, the modified ethylene-propylene copolymer can be used as such or various mixtures of such modified copolymers can be employed. The composition can also contain conventional components such as reinforcing agents, for instance, glass fibers, carbon fibers and asbestos; fillers exemplified by silica, alumina, silica-alumina, silica-magnesia, calcium silicate, calcium carbonate, glass beads, glass flakes and the like; lubricants such as higher fatty acids and paraffin waxes; stabilizers; anti-static agents; antioxidants; fire retardants; dyes; pigments; plasticizers; mold release agents and the like.

The polybutylene terephthalate, modified elastomeric ethylene-propylene copolymer, and, if used, conventional additives are mechanically blended and molded in the known fashion. The manner of preparing the blends is not a critical aspect of the present invention and the components may be admixed in any order using standard polymer blending techniques and apparatus. Generally the components may be mixed in a mixer, such as a ribbon blender, V-shaped blender, tumbler or Henschel mixer, and then melt-kneaded at temperatures of about 120° to 310°C, preferably about 180° to 260°C, in a Banbury mixer, single or multiscrew extruder, rolling mill, continuous extruder or the like. For example, suitably dried and preselected amounts of the ingredients can be mixed in a blender and fed into a single screw extruder and grinder for pelletization. The resulting pellets or granules are thereafter injection molded.

In order to further illustrate the present invention, various examples are given below. In these examples, as throughout this specification and claims, all parts and percentages are by weight and all temperatures in °C unless otherwise stated.

Five modified ethylene-propylene copolymers were provided:

The hydroxylated, EP-OH polymer (Example 2), contained 61 parts propylene, 39 parts ethylene and 0.7 parts of 2-hydroxymethyl-5-norbornene.

An aminated copolymer was prepared to contain ethylene and propylene in a ratio of 45 : 55 and 0.6 parts of 2-(N-butyl-aminomethyl)-5-norbornene by weight having a Mw/Mn of 2.0 and a number average molecular weight of 40-60,000 was designated EP-NHR (Examples 3 and 4).

Three carboxylated copolymers were prepared from ethylene, propylene and 2-carboxy-5-norbornene (Examples 7-9). The first polymer had an ethylene content of 43%, a 5-norbornene carboxylate content of 4.3 meq/100 g. and a Mooney viscosity at 127°C of 11 is designated below as COOH-I. The second carboxylated polymer, designated below as COOH-II, had an ethylene content of 45%, a 5-norbornene carboxylate content of 6 meq/100 g. and a Mooney viscosity of 16 while the third sample, designated COOH-III below, had an ethylene content of 45%, a 5-norbornene carboxylate content of 6 meq/100g and a Mooney viscosity of 7. All three carboxylated polymers had a $\overline{Mw}/\overline{Mn}$ of 2.0.

Blends utilizing these modified copolymers were formed as follows: A commercially available polybutylene terephthalate sold by General Electric under the trademark Valox 315 was dried for two hours at 110°C. Various amounts of one or more of the modified ethylene propylene copolymers were mixed with the dried polybutylene terephthalate and the mixture fed into the inlet of a single screw extruder which was being operated at 20 to 32 rpm. The extruder had a temperature of 232°C at the inlet, of 243°C in the main portion of the barrel, and an outlet temperature of 238°C. The extruded blend was then ground and injection molded.

The notched Izod impact strength of the resulting molded articles each having a thickness of 1/8 inch (0.3175 cm), was measured in accordance with ASTM D 256 at four temperatures: ambient (room) temperature, 0°C, -20°C and -40°C. Example (1) shows properties of the unmodified polybutylene terephthalate, greater notched Izod values show increased strength at the lower temperatures measured. The low temperature impacts were measured by first soaking the samples in a dry ice/isopropyl alcohol mixture for 30 minutes. The desired temperature was regulated by addition of small amounts of dry ice. The samples were then removed from the bath and placed in the impact apparatus and tested as quickly as possible. The experiment required about 2 seconds, so the temperature rise was small. The spiral flow, which is a measure of the processability of the plastic blend of each combination, was measured in the injection molder using a standard mold, pressures and temperatures. The value of 8.5 cm at 1100 psi for PBT without modifier is indicative of adequate processability for most uses. Values differing within a range of about 2.5 cm. are not statistically significant whereas greater values, that is ≧ 11.0 cm., show increased processability.

Table 1

| Modifier | PBP, Parts | Modifier, Parts | Izod (ft.lb./in. notch) at RT | 0°C | -20°C | -40°C | Spiral Flow (cm at 1100 psi) |
|---|---|---|---|---|---|---|---|
| (1) None | 100 | 0 | 1.1 | 1.0 | 1.0 | 0.8 | 8.5 |
| (2) EP-OH | 80 | 20 | 2.1 | 1.6 | 1.4 | 1.1 | 6 |
| (3) EP-NHR | 80 | 20 | 1.5 | 1.2 | 1.1 | 1.0 | - |
| (4) EP-NHR | 70 | 30 | 6.2 | 4.9 | 3.3 | 2.5 | 12.5 |
| (5) COOH-I | 70 | 30 | 28.5 | 7.1 | 4.5 | 2.9 | 11.5 |
| (6) COOH-I | 80 | 20 | 20.1 | 5.4 | 6.8 | 2.9 | 11.5 |
| (7) COOH-II | 80 | 20 | 3.3 | 2.5 | 2.1 | * | 11.0 |
| (8) COOH-III | 80 | 20 | 9.6 | 2.7 | 2.1 | * | 10.5 |

* not measured

The data in the foregoing table for Examples 1-8 shows that all of the samples blended with the modified elastomers gave results which were substantially better than those achieved using the virgin polybutylene terephthalate. Moreover, the superior results were found even when the temperature was substantially below room temperature. The table further shows that the processability, as measured by the spiral flow, was improved by the incorporation of the modifier into the polybutylene terephthalate.

Various changes and modifications in the products and process of this invention can be made without departing from the spirit and scope thereof. The various embodiments which have been disclosed herein were for the purpose of further illustrating the invention but were not intended to limit it.

## Claims

1. A resin blend comprising polybutylene terephthalate (PBT) and from 5 to 35 weight percent (based on PBT) of at least one copolymer of ethylene, higher mono-olefin, from 0 to 15 weight percent of a polymerizable non-conjugated diene and from 0.1 to 5 weight percent of a 2-substituted-5-norbornene in which said 5-norbornene substituent is carboxyl, hydroxyalkyl, amino, N-aminoalkyl or N-aminoaryl, wherein each said alkyl or aryl group individually contains from 1 to 10 carbon atoms.

2. The resin blend of claim 1 wherein the amount of the 2-substituted-5-norbornene in said copolymer is from 0.25 to 1 weight percent.

3. The resin blend of claim 1 or 2 wherein the amount of copolymer is from 20 to 30 weight percent.

4. The resin blend of claim 1, 2 or 3 wherein said copolymer is a copolymer of ethylene, propylene and 2-carboxy-5-norbornene.

5. The resin blend of claim 1, 2 or 3 wherein said copolymer is a copolymer of ethylene, propylene and 2-hydroxymethyl-5-norbornene.

6. The resin blend of claim 1, 2 or 3 wherein said copolymer is a copolymer of ethylene, propylene and 2-(N-butyl-aminomethyl)-5-norbornene.